# EUROPEAN PATENT APPLICATION

(11) **EP 4 624 290 A1**
(43) Date of publication of application: **01.10.2025**
(21) Application number: 24215759.2
(22) Date of filing: 27.11.2024
(51) Int. Cl.: B60W 30/02, B60W 30/045, B60W 30/14, B60W 50/14, B60W 50/00

(54) **SYSTEM AND METHOD FOR ENHANCING DRIVING COMFORT DURING CURVE DRIVING**

(30) Priority: 26.03.2024 EP 24166116
(71) Applicant: Elektrobit Automotive GmbH, 91058 Erlangen (DE)
(72) Inventor: Adelberger, Daniel, 91058 Erlangen (DE); Canlitürk, Batuhan, 91058 Erlangen (DE); Krishnakumar, Priyamvadha, 91058 Erlangen (DE)
(74) Representative: Aumovio Corporation

(57) **Abstract**

This disclosure relates to a system (50) for enhancing driving comfort during curve driving, comprising a detection unit (51) for recording the lateral acceleration of a vehicle (F) during curve driving, a storage unit (52) for storing the recorded lateral acceleration data in a database, a processing unit (53) for determining an acceptance threshold (T) for lateral acceleration (A) based on the stored data, a prediction unit (54) for predicting an expected lateral acceleration (A) for an upcoming curve (K) based on vehicle data and/or map information, a comparison unit (55) for comparing the expected lateral acceleration (A) with the threshold (T), and an output unit (56) for issuing a warning to the driver and/or influencing the driving operation of the vehicle if the expected lateral acceleration (A) exceeds the threshold (T). Furthermore, this disclosure relates to a method for enhancing driving comfort during curve driving, a computer program product and a storage medium on which the computer program product is stored.

## Description

The invention relates to a system and method for enhancing driving comfort during curve driving. Furthermore, this disclosure relates to a computer program product and a storage medium on which a computer program product is stored.

In modern vehicles, increasing emphasis is placed on optimizing driving comfort, especially in cornering situations. Conventional systems may partially record vehicle data such as speed and inclination angle. However, they often lack a comprehensive, adaptive solution that improves driving comfort through real-time adjustments tailored to actual cornering. In particular, critical acceleration values are often not dynamically adapted to the driver's current driving style or personal preferences, which can limit both safety and comfort.

The known systems have the disadvantage that they do not base the measurement and evaluation of lateral acceleration on individually stored data, which means that threshold adjustments are not dynamically performed. This results in a less optimal alignment with actual driving conditions.

For example, US 7,609,150 B2 discloses a method for controlling vehicle hazard warnings to a driver through an in-vehicle warning system that involves several steps. First, the system identifies the driver of the vehicle. It then monitors the driving environment by using data from one or more sensors to detect the current driving situation. If a potential hazard is identified, the system estimates how long it would likely take the driver to respond to the hazard, based on stored data of the driver's past responses in similar situations. Next, the system calculates the time remaining before the driver encounters the hazard and compares this remining time to the predicted response time. Based on this comparison, it determines whether a warning needs to be issued to the driver. If a warning is deemed necessary, the system then decides on the best method or methods to present the warning to ensure timely and effective driver response.

An object of the present disclosure is to provide a system and method for enhancing driving comfort during curve driving that adapts to the driver and the driver's historical comfort levels.

This objective is achieved by a system for enhancing driving comfort during curve driving disclosed herein and a method for enhancing driving comfort during curve driving disclosed herein. Preferred or advantageous embodiments can be inferred from the description and drawings.

The subject matter of the present disclosure is a system for improving driving comfort during curve driving, comprising a detection unit for recording the lateral acceleration of a vehicle during curve driving, a storage unit for storing the recorded lateral acceleration data in a database, a processing unit for determining an acceptance threshold for lateral acceleration based on the stored data, a prediction unit for predicting an expected lateral acceleration for an upcoming curve based on vehicle data and/or map information, a comparison unit for comparing the expected lateral acceleration with the threshold, and an output unit for issuing a warning to the driver if the expected lateral acceleration exceeds the threshold.

The detection unit records the lateral acceleration of a vehicle during curve driving. Additionally, it can capture vehicle data such as the vehicle speed, a steering angle of at least one wheel and/or an acceleration, thereby enhancing predictive accuracy. This enables a more precise recording of driving conditions, which e.g., enhances comfort through more accurate adaptation to the driving situation.

In one embodiment, the system is designed to activate only after a sufficient amount of relevant data has been collected. This guarantees high-quality alerts and interactions when the system becomes operational. This data-driven activation ensures that alerts and adaptations are accurate and meaningful from the moment the system begins engaging with the driver, increasing initial trust and system acceptance.

The recorded lateral acceleration data is stored in a database of said storage unit, allowing for historical analysis and threshold adaptation. In one embodiment the storage unit is configured to continuously update or extend the stored lateral acceleration data to adjust the threshold. This ensures dynamic adaptation to changing driving conditions and allows the system to learn the driver's long-term driving behaviour over time. To "update" means, that stored data might be deleted due to new, more accurate data saved in the database. Hence, existing data can be replaced by new data or information. To "extend" means that new data is only added and integrated into the database without necessarily having to delete existing data.

Using the stored data, the processing unit determines the acceptance threshold for lateral acceleration. The determined threshold reflects a lateral acceleration accepted by the driver of the vehicle wherein an upper limit is set as the threshold. In other words, the threshold represents the maximum lateral acceleration deemed acceptable by the driver of the vehicle, with an upper limit established as the threshold. The threshold can be dynamically adjusted based on statistical distribution analysis of the stored data or, in specific configurations, through data-driven models, such as a neural network. Such configurations may include driver-specific adaptations based on individual comfort levels and driving habits, vehicle-specific settings tailored to handling characteristics, or adjustments for varying road and environmental conditions like wet, icy or leafy roads. Additionally, configurations might account for geographical or regional driving styles, the purpose of the drive, e.g., comfort vs. performance modes, or even real-time inputs such as traffic density and vehicle-to-vehicle communication. In this sense, the threshold is determined by a mathematical model or a neural network trained based on the stored lateral acceleration data. The threshold can also be adjusted manually, for example through an interface or the like.

When the system has been activated and the car reaches an upcoming curve the prediction unit predicts an expected lateral acceleration for the upcoming curve based on vehicle-specific data or map information such as curve radii and/or road layout in combination with an estimate of the vehicle speed, for example measured by a speed sensor or the like. To do this, the prediction unit anticipates the upcoming curve and calculates the expected lateral acceleration, accordingly, taking the current vehicle speed into account. The prediction unit uses the recorded vehicle data to determine the expected lateral acceleration in the upcoming curve. This increases the accuracy of the calculated lateral acceleration. The map information may comprise and provide information of curve radii and/or a road layout.

The comparison unit compares the expected lateral acceleration against the determined threshold. If the anticipated lateral acceleration exceeds the determined threshold, it signals the output unit or directly transmits a control signal to modify the vehicle's operation, for instance, by reducing speed. The comparison unit can transmit signals to a control unit of a drivetrain in order to influence the driving operation of the vehicle, in particular to reduce the speed of the vehicle.

When activated by the comparison unit, the output unit issues a warning or several warnings to the driver based on the comparison result of the comparison unit, either through visual or acoustic signals, improving response times and awareness of high lateral forces. Haptic warnings are also possible. The warning signal is intended to alert the driver to a potential loss of comfort on the upcoming curve, in particular if no action is taken.

Advantageously, the comparison unit includes means to transmit signals to a control unit if the expected lateral acceleration exceeds the threshold, which is arranged to influence the driving operation of the vehicle, particularly to reduce the vehicle speed. This increases safety during cornering.

Also, the output unit includes means for issuing a visual and/or acoustic warning, which allows flexible adaptation of the warning signals to the driver's preferences.

The system described herein thus improves driving comfort by adjusting to both driving behaviour and road layout. Furthermore, safety is optimized and abrupt lateral shifts in the vehicle are minimized.

Another subject matter of the present disclosure is a method for enhancing driving comfort during curve driving, comprising the steps of:
a) recording the lateral acceleration of a vehicle during curve driving,
b) storing the recorded lateral acceleration data in a database,
c) determining an acceptance threshold for lateral acceleration based on the stored data,
d) predicting an expected lateral acceleration for an upcoming curve based on vehicle data and/or map information,
e) comparing the expected lateral acceleration with the threshold, and
f) issuing a warning to the driver and/or influencing the driving operation of the vehicle if the expected lateral acceleration exceeds the threshold.

The invention provides several advantages in enhancing driving comfort and user experience without requiring significant additional resources or hardware. One key benefit of the invention is its exceptionally low false positive rate compared to non-personalized or grouped solutions. Because the system issues warnings and interventions based on the comparison result of the comparison unit and solely on the individual driver's behaviour in comparable situations, it minimizes unnecessary alerts that might otherwise reduce user trust in the system. For example, a driver who typically maintains higher speeds in curves may receive warnings tailored to their usual behaviour rather than being prompted unnecessarily by generic thresholds.

For the base functionality, which involves issuing warnings, no additional hardware is necessary, as long as the system can access vehicle positioning data and map information. The base functionality can be achieved using existing hardware components such as GPS modules for positioning, an onboard navigation system for map information, and vehicle sensors like accelerometers or gyroscopes to measure lateral acceleration. This means that, for most modern vehicles, the invention can be implemented with existing onboard technology, providing a cost-effective solution for manufacturers and users alike.

The predictive component of the invention, based on map data, enables it to function effectively even on routes that are unfamiliar to the driver. The system abstracts the driver's behaviour from similar driving situations, allowing it to issue appropriate warnings or suggestions without requiring specific data for each new road. For example, if a driver often slows down on sharp curves, the system will anticipate similar behaviour even on roads the driver has never travelled before.

The invention also continually adapts to the driver's unique preferences and behaviours. This ongoing personalization ensures that the system remains relevant and accepted by the user over extended periods, reducing the likelihood of system fatigue or disengagement from unnecessary alerts.

By prioritizing comfort rather than safety alone, the system allows for more frequent interaction with the driver, fostering a more positive perception of the system. Drivers receive ongoing feedback that is aligned with their comfort levels, enhancing the overall user experience without the pressure associated with safety-critical systems.

A computer program product according to the invention is loaded directly into the internal memory of a digital computer and comprises software code segments with which the features according to the method described herein are executed when the computer program product is running on a computer. A storage medium according to the invention, in particular a permanent, i.e. non-transitory, storage medium, is one on which a computer program product according to the invention is stored.

Further details are explained with reference to further drawings below. These show in:
- Fig. 1: a block diagram of a method for enhancing driving comfort during curve driving according to one embodiment of the invention,
- Fig. 2: a highly schematic illustration of a system for enhancing driving comfort during curve driving according to one embodiment of the invention,
- Fig. 3: a schematic illustration of a step for measuring and calculating lateral acceleration,
- Fig. 4: a schematic illustration of a step for determining a threshold value by distributing recorded lateral acceleration data,
- Fig. 5: a schematic illustration of a step for predicting the curvature of an upcoming curve,
- Fig. 6: a schematic illustration of a step for predicting lateral acceleration on the upcoming curve shown in Fig. 4; and
- Fig. 7: a schematic illustration of a step for comparing the calculated, expected lateral acceleration with the determined threshold value of the lateral acceleration.

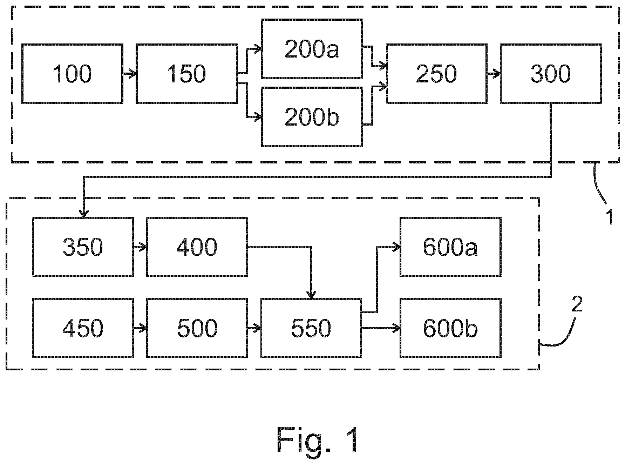

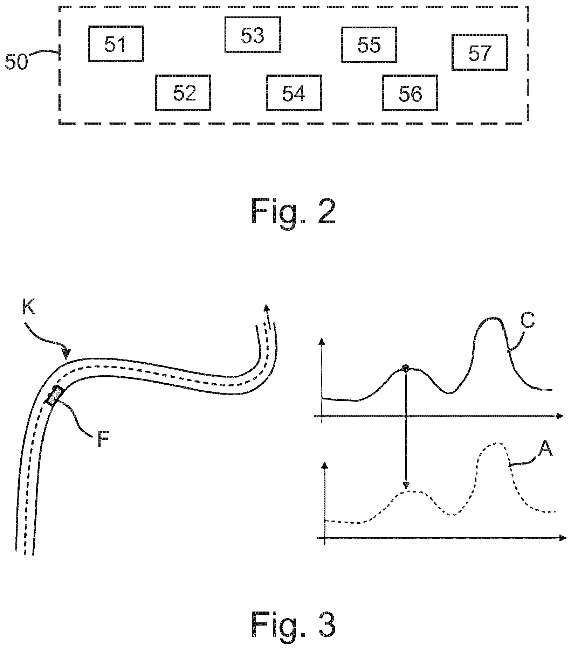

The figures illustrate an exemplary embodiment of a system 50 and a method for enhancing driving comfort during curve driving. The steps of the method are shown in Figure 1 wherein the method is explained in more detail with reference to the following figures. The individual units of the system 50 are shown in Figure 2. The individual steps of the method according to the invention as shown in Figure 2 are explained below with reference to the individual units of the system 50 shown in Figure 1, without directly associating the reference symbols with Figures 1 or 2.

On curvy roads with limited view, a driver of a vehicle cannot foresee upcoming potentially narrow curves. This might lead to situations, where the driver faces a situation which might not be yet critical in terms of physical limits, but uncomfortable based on typical situations the respective driver accepts when driving in curves. A measure that can be abstracted from all possible curves driven, is a lateral acceleration A, exemplarily shown in Fig. 3, acting on the vehicle F/driver in a curve K which can either be measured or also calculated based on street geometry as well as vehicle states such as the respective velocity.

The method for enhancing driving comfort during curve driving basically focusses on a process that is split into two stages represented by two dashed rectangles 1, 2 in Figure 1. In the first stage, a learning stage, in a first step 100 a detection unit 51 records a vehicle's lateral acceleration A (shown in Fig. 3) during curve driving. The detection unit 51 is arranged to record vehicle data, in particular a vehicle speed, for example detected by a speed sensor not shown herein, and/or a steering angle of at least one wheel of a vehicle F (shown in Fig. 3) and/or an acceleration, for example detected by an accelerometer not shown herein. The detection unit 51 is also arranged to detect the start or initiation of cornering, for example when a lateral force and/or acceleration is detected or a predefined limit value for a lateral force and/or acceleration is exceeded. In a step 150 the recorded lateral acceleration A data is then transmitted to a storage unit 52. This data includes values of lateral acceleration when driving through curves which can be based on direct measurement (step 200a) and/or calculations (step 200b).

This is schematically shown in Figure 3, wherein in the illustration of curve K on the left-hand side of Figure 3, the lateral acceleration A is measured while the vehicle F is traveling along the curve K. Figure 3 illustrates, on the right-hand side, two diagrams related to vehicle cornering. In the top diagram, the curvature (c=1/r) is plotted on the y-axis as a function of the vehicle's position (x-axis) during curve driving. In the bottom diagram, the resulting or calculated lateral acceleration A is shown on the y-axis as a function of the vehicle's position (x-axis) during cornering. The lateral acceleration A of the vehicle F is therefore directly related to the curvature C of the curve K at each point of the curve K.

The data is stored in a database according to step 250. The data stored in the data base can be evaluated to assess the data quality of the collected data. If a predefined data quantity and/or data quality is available, the next stage of the method according to the second rectangle 2 can be initiated according to a step 300. The storage unit 52 is arranged to continuously update/extend the stored lateral acceleration A data stored in the data base. The recording of further data enriches the database.

In the second stage, the application stage according to the second rectangle 2, the recorded data is used to interact with the vehicle F and/or driver. In a step 350 the recorded acceleration data is processed by a processing unit 53. In a step 400 an acceptance threshold T for lateral acceleration is determined based on the data. The determination of the threshold T value can be done in different ways, e.g., by creating a distribution analysis of the data and accepting a certain percentage of data as upper outliers, or by training a neural network or other mathematical modelling approach which yields a prediction of an accepted lateral acceleration A based on a present scenario.

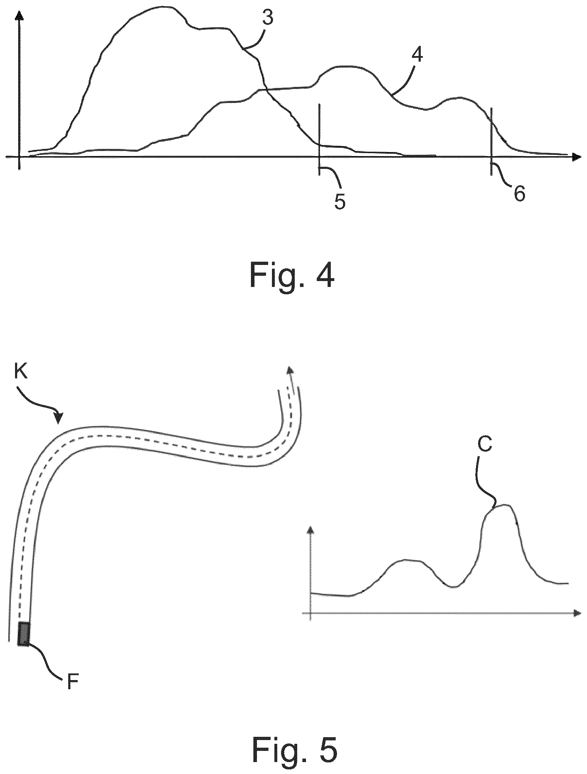

An example for threshold T determining is shown in Figure 4, wherein the diagram shows a frequency (y-axis) of a lateral acceleration A (x-axis) occurring, in this example a first frequency profile 3, which can correspond to a driving behaviour of a cautious driver, and a second frequency profile 4, which can correspond to a driving behaviour of a more aggressive driver. It is obvious from Figure 4 that the more aggressive driver experiences higher lateral acceleration than the more cautious driver due to his more aggressive driving style, so that a threshold of lateral acceleration experienced as still pleasant by the more aggressive driver is also higher than for the more cautious driver. The threshold T can correspond to a percentage of the recorded lateral acceleration values. For the cautious driver this is exemplified by a first vertical line 5. For the more aggressive driver this is exemplified by a second vertical line 6. The percentage can be fixed or changed or set manually by the driver via a suitable interface, such as a touchscreen display, physical dashboard controls, e.g., knobs or buttons, voice command systems, or a mobile application connected to the vehicle.

The steps 350 and 400 can also be part of the first stage represented by the rectangle with reference 1 according to Fig. 1, as the collected data is continuously updated/extended and therefore the threshold T is also permanently updated.

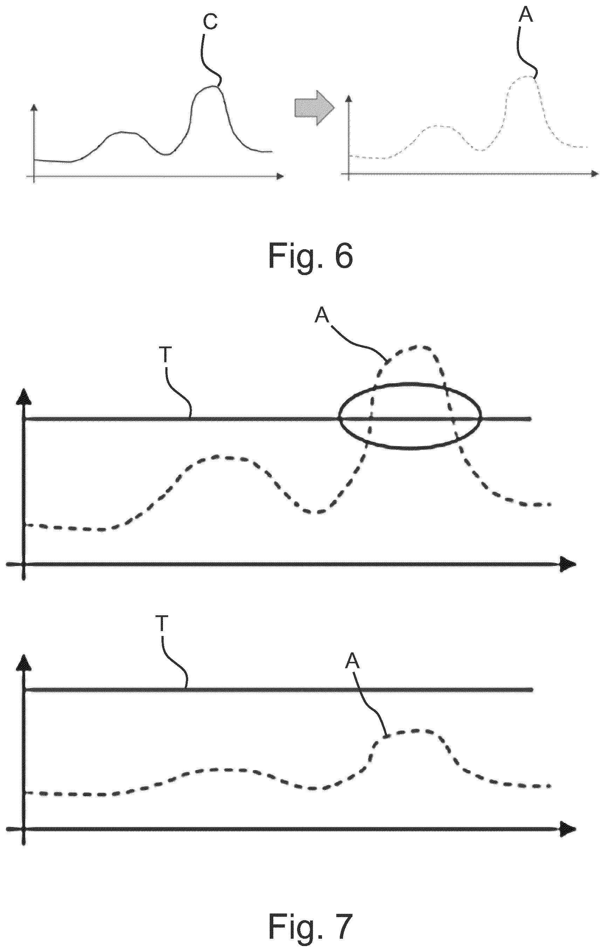

If the vehicle F approaches an upcoming curve K (see Figure 5, left side) during normal driving with a certain velocity (step 450), in step 500 a prediction unit 54 calculates/predicts a lateral acceleration A to be expected in the upcoming curve K based on map information of the upcoming road. The calculation is also made based on vehicle data recorded by the system 50 itself or provided to or retrieved by the system 50. In particular, the prediction unit 54 uses curve radii and/or a road layout in combination with an estimate of the vehicle speed for calculating the expected lateral acceleration A for the upcoming curve K. According to Figure 5, right side, in conjunction with Figure 6 at first a curvature C of the curve K is calculated from the map data. Secondly the curvature C of the curve K is then converted into an expected lateral acceleration A of the vehicle F based on the calculated curvature C and vehicle information.

A comparison unit 55 is arranged such that this information, i.e. the expected lateral acceleration A, is then compared with the determined threshold T of the lateral acceleration A accepted by the driver (step 550).

The comparison can have two results, as illustrated in Figure 7, either at least part of the expected lateral acceleration exceeds the threshold T as shown in Figure 7, top diagram, or the expected lateral acceleration is below the threshold T as shown in Figure 7, bottom diagram. If the prediction exceeds the threshold T, the system 50, in particular an output unit 56, can either signal a warning to the driver (step 600a), in particular issuing visual and/or acoustic warnings, and/or reduce the velocity of the vehicle F accordingly (600b). In the latter case, the system 50 must be designed to communicate with the vehicle F accordingly, in particular to intervene in driving operations of the vehicle F. Accordingly, the system 50 can be arranged to influence the driving operation of the vehicle F, in particular to actuate or control one or more brakes and/or the drivetrain of the vehicle F. In this sense the comparison unit 55 is arranged, if the expected lateral acceleration A exceeds the threshold T value, to transmit signals to a control unit 57, shown in Fig. 2, which is arranged to influence the driving operation of the vehicle F, in particular to reduce the speed of the vehicle F. Reducing the speed of the vehicle F helps to mitigate the effects of excessive lateral acceleration, ensuring the vehicle F remains stable and improving passenger comfort and safety during curve driving.

It is obvious that several or all units 51 - 57 of the system 50 shown in Figure 2 can be part of a higher-level unit, comprising two or more of said units 51 - 57. For example, the processing unit 53, the prediction unit 54 and the comparison unit 55 can be combined into a single unit that is connected to the detection unit 51, the output unit 56 and the control unit 57 in a signal-transmitting manner.

### Reference symbols

- 1: rectangle
- 2: rectangle
- 3: frequency profile
- 4: frequency profile
- 5: vertical line
- 6: vertical line
- 50: system
- 51: detection unit
- 52: storage unit
- 53: processing unit
- 54: prediction unit
- 55: comparison unit
- 56: output unit
- 57: control unit
- 100: step
- 150: step
- 200a: step
- 200b: step
- 250: step
- 300: step
- 350: step
- 400: step
- 450: step
- 500: step
- 550: step
- 600a: step
- 600b: step

- A: lateral acceleration
- C: curvature
- F: vehicle
- K: curve
- T: threshold

## Claims

1. System (50) for enhancing driving comfort during curve driving, comprising:
a) a detection unit (51) for recording the lateral acceleration of a vehicle (F) during curve driving,
b) a storage unit (52) for storing the recorded lateral acceleration data in a database,
c) a processing unit (53) for determining an acceptance threshold (T) for lateral acceleration (A) based on the stored data,
d) a prediction unit (54) for predicting an expected lateral acceleration (A) for an upcoming curve (K) based on vehicle data and/or map information,
e) a comparison unit (55) for comparing the expected lateral acceleration (A) with the threshold (T), and
f) an output unit (56) for issuing a warning to the driver and/or influencing the driving operation of the vehicle (F) if the expected lateral acceleration (A) exceeds the threshold (T).

2. System (50) according to claim 1, **characterized in that** the detection unit (51) is arranged to record vehicle data, in particular a vehicle speed and/or a steering angle of at least one wheel of the vehicle (F) and/or an acceleration.

3. System (50) according to claim 1 or 2, **characterized in that** the prediction unit (54) is arranged to use curve radii and/or a road layout in combination with an estimate of the vehicle speed for calculating the expected lateral acceleration (A) for the upcoming curve (K).

4. System (50) according to any of the preceding claims, **characterized in that** the storage unit (52) is arranged to continuously update or extend the stored lateral acceleration (A) data to adapt the threshold (T).

5. System (50) according to any of the preceding claims, **characterized in that** the comparison unit (55) is arranged, if the expected lateral acceleration (A) exceeds the threshold (T) value, to transmit signals to a control unit (57), which is arranged to influence the driving operation of the vehicle (F), in particular to reduce the speed of the vehicle (F).

6. Method for enhancing driving comfort during curve driving, comprising the steps of:
a) recording the lateral acceleration of a vehicle (F) during curve driving,
b) storing the recorded lateral acceleration data in a database,
c) determining an acceptance threshold (T) for lateral acceleration (A) based on the stored data,
d) predicting an expected lateral acceleration (A) for an upcoming curve (K) based on vehicle data and/or map information,
e) comparing the expected lateral acceleration (A) with the threshold (T), and
f) issuing a warning to the driver and/or influencing the driving operation of the vehicle (F) if the expected lateral acceleration (A) exceeds the threshold (T).

7. Method according to claim 6, **characterized in that** the determination of the threshold (T) of lateral acceleration is performed by a distribution analysis of the stored data.

8. Method according to claim 6 or 7, **characterized in that** the threshold (T) is determined by a mathematical model or a neural network trained based on the stored lateral acceleration data.

9. Method according to any one of claims 6 to 8, **characterized in that** the detection unit (51) records vehicle data, in particular a vehicle speed and/or a steering angle of at least one wheel of the vehicle (F) and/or an acceleration.

10. Method according to any one of claims 6 to 9, **characterized in that** the calculation of the expected lateral acceleration (A) is based on curve (K) radii and/or a road layout in combination with an estimate of the vehicle speed.

11. Method according to any one of claims 6 to 10, **characterized in that** the stored lateral acceleration data is continuously updated or extended to adapt the threshold (T).

12. Method according to any one of claims 6 to 11, **characterized in that** issuing the warning includes visual and/or acoustic signals based on the comparison result of the comparison unit (55).

13. Method according to any one of claims 6 to 12, **characterized in that** the comparison unit (55) transmits signals to a control unit (57) in order to influence the driving operation of the vehicle (F), in particular to reduce the speed of the vehicle (F), if the expected lateral acceleration (A) exceeds the threshold (T) value.

14. A computer program product capable of being directly loaded into an internal memory of a digital computer and comprising software code segments for executing the method according to any one of claims 6 to 13 when the computer program product is running on a computer.

15. A storage medium on which a computer program product according to claim 14 is stored.
